# EUROPEAN PATENT SPECIFICATION

(11) **EP 0 476 985 B1**
(45) Date of publication and mention of the grant of the patent: **04.12.1996**
(21) Application number: 91308495.0
(22) Date of filing: 18.09.1991
(51) Int. Cl.: G11B 27/028, H04N 5/262

(54) **Video special effects generation**
Generierung von speziellen Videoeffekten
Génération d'effets spéciaux vidéo

(30) Priority: 20.09.1990 JP 251345/90
(43) Date of publication of application: 25.03.1992
(73) Proprietor: SONY CORPORATION, Tokyo 141 (JP)
(72) Inventor: Inoue, Kiyoshi, c/o Patents Division, Shinagawa-ku, Tokyo 141 (JP); Takamori, Tsutomu, c/o Patents Division, Shinagawa-ku, Tokyo 141 (JP); Ninomiya, Ichiro, c/o Patents Division, Shinagawa-ku, Tokyo 141 (JP)
(74) Representative: Harris, Ian Richard

(56) References cited:
- EP-A- 0 378 393
- GB-A- 2 023 962
- US-A- 4 956 725
- PATENT ABSTRACTS OF JAPAN vol. 7, no. 236 (E-205)(1381) 20 October 1983 & JP-A-58 124 380
- TOSHIBA REVIEW, no. 161, 1987, Tokyo, JP, pp. 3-6; Y. TANAKA et al.: '3-Dimensional Digital Picture Effect Equipment, the DPE-X'

## Description

This invention relates to video special effect generation for processing video signals to generate special visual effects to be displayed.

A known electronic editing system comprises a plurality of video tape recorders (VTRs), an edit controller, a switcher, and an image converter. After a plurality of video signals reproduced respectively by the VTRs have been processed for special effects, the processed video signals are electronically edited, and recorded on another VTR.

As disclosed in Japanese laid-open patent specification JP-A-56 062 485 for example, the switcher is capable of effecting on the video display screen a transition from an image represented by one video signal to an image represented by another video signal, the new image gradually appearing from one side or corner of the old image. This scene transition is one form of special effect called 'wipe'.

As disclosed in US patent specification US-A-4 965 844, the image converter employs a digital memory, and progressively enlarges or reduces an image represented by a video signal while at the same time progressively changing the position of the image on a reference screen (the screen of a television receiver).

The edit controller serves to control the tape transport in the VTRs for reproducing video signals, and the VTR for recording the edited video signal, and the timing of recording and reproducing the video signals.

In the known electronic editing system that incorporates such a special effects generating apparatus, since the switcher and the image converter operate independently of each other, it has been difficult to effect an adequate image processing process based on a combination of image wipe, image deformation, and image movement.

According to the present invention there is provided a special effects generating apparatus for processing first, second and third video signals supplied respectively from first, second and third video signal sources to produce an output video signal, the apparatus comprising:
first boundary data generating means, responsive to the first video signal from the first video signal source, for generating, at a plurality of points of time along a first time base, data indicative of positions of edges of a first image represented by the first video signal, with respect to a reference video frame, and for storing the generated data in a first memory;
second boundary data generating means, responsive to the second and third video signals from the second and third video signals sources, for generating, at a plurality of points of time along a second time base, data indicative of positions of a boundary between second and third images represented by the second and third video signals, and for storing the generated data in a second memory;
image converting means for processing frames stored in said first memory to produce a fourth video signal based on said edges, and for generating a key signal indicative of a position of said fourth video signal;
selecting means for selectively outputting said second and third video signals based on the data stored in said second memory; and
combining means for keying said fourth video signal into an output signal from said selecting means based on said key signal.

According to the present invention there is also provided a method of generating a special effect by processing first, second, and third video signals to produce an output video signal, the method comprising the steps of:
establishing edges of a first image represented by the first video signal with respect to a reference display screen at a plurality of points of time along a first time base;
establishing a boundary between a second image represented by the second video signal and a third image represented by the third video signal at a plurality of points of time along a second time base;
converting said first image to form a fourth image based on the established edges; generating a key signal indicative of the position of said fourth image;
combining the second and third video signals into a video signal representing a fifth image, based on said established boundary; and
keying said fourth image into said fifth image based on said key signal.

The invention will now be described by way of example with reference to the accompanying drawings, throughout which like parts are referred to by like references, and in which:
Figure 1 is a block diagram of a special effects generating apparatus according to the present invention;
Figures 2a to 2e and 3a to 3o are views illustrative of respective operation sequences of the apparatus of Figure 1; and
Figures 4A to 4C are diagrams showing various points of time at which various video signals are generated in the apparatus of Figure 1.

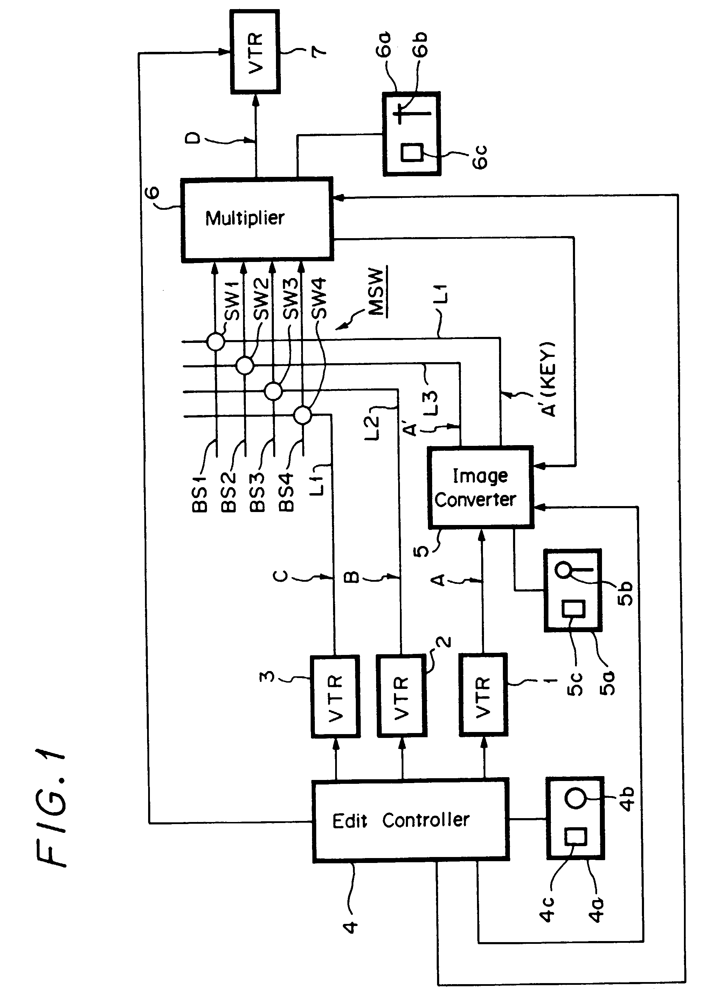

In Figure 1, the embodiment of special effects generating apparatus is connected to VTRs 1, 2 and 3 for reproducing recorded video signals, and a VTR 7 for recording signal. Each of the VTRs 1, 2, 3 and 7 is of the helical scan type, and at least one may be replaced with a video disc recorder or player.

The apparatus includes an edit controller 4 for controlling tape transport, operation modes, and timing of recording and reproducing video signals in the VTRs 1, 2, 3 and 7. The edit controller 4 has a control panel 4a with a jog dial 4b, a display unit (display monitor) 4c, and various control switches (not shown). Reproduced video signals from the VTRs 1, 2 and 3, and a composite video signal from a multiplier 6 (described later on) are selectively supplied to the display unit 4c for display. The edit controller 4 may be an independent device or may be incorporated in the VTR 7.

The apparatus also includes an image converter 5 having a control panel 5a comprising a joystick 5b, a display unit (display monitor) 5c, and various control switches (not shown).

The multiplier 6 has a control panel 6a that is equipped with a fader lever 6b, a display unit (display monitor) 6c, and various control switches (not shown). The multiplier 6 has input terminals connected to four bus lines BS1, BS2, BS3 and BS4 that are crossed by four signal lines L1, L2, L3 and L4. A matrix switch MSW comprising sixteen on/off switches is connected between the bus lines BS1 to BS4 and the signal lines L1 to L4, with the on/off switches disposed respective at the points of intersection of the bus lines BS1 to BS4 and the signal lines L1 to L4. When four on/off switches SW1, SW2, SW3 and SW4 of the matrix switch MSW are turned on, video signals from the signal lines L4 to L1 are supplied over the respective bus lines BS1 to BS4 to the multiplier 6 in which the video signals are multiplied. The two video signals supplied to the bus lines BS3 and BS4 are turned on and off by the corresponding on/off switches such that a transition is effected from one side (left side) or one corner (upper left corner) of the image represented by one of the video signals to the image represented by the other video signal. The multiplier 6 supplies a composite video signal (composite colour video signal) to the VTR 7 by which it is recorded on a magnetic tape (not shown) along oblique tracks thereon. The composite video signal is also supplied to the edit controller 4 so that it is displayed on the display unit 4c. The composite video signal is also displayed on the display unit 6c of the multiplier 6.

The reproduced video signal A from the VTR 1 is supplied to the image converter 5 whose output video signals A′ and A′ (KEY) are supplied to the signal lines L3 and L4, respectively. The reproduced video signals B and C from the VTRs 2 and 3 are supplied to the signal lines L2 and L1, respectively.

The image converter 5 and the multiplier 6 are controlled by the edit controller 4. The image converter 5 is also controlled by the multiplier 6.

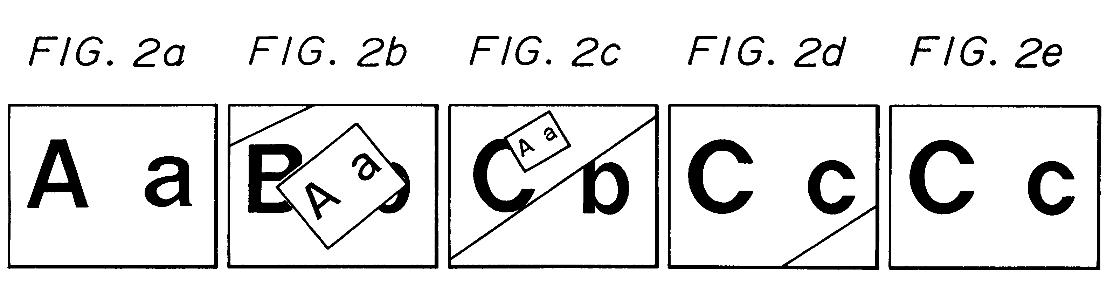

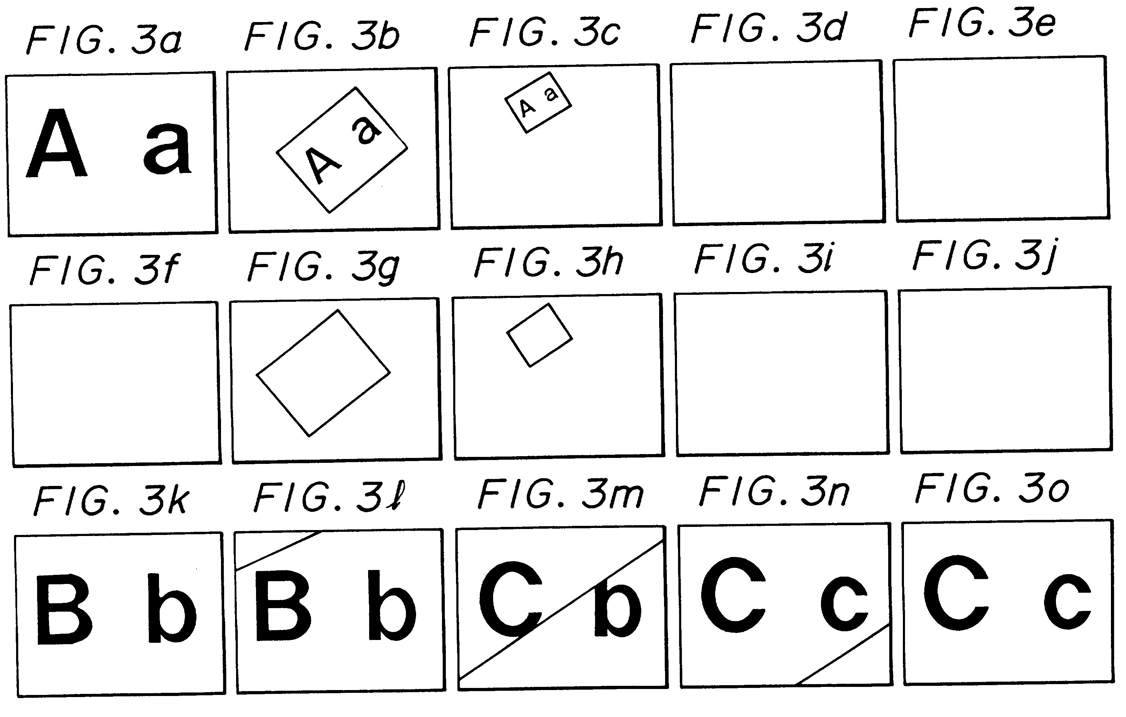

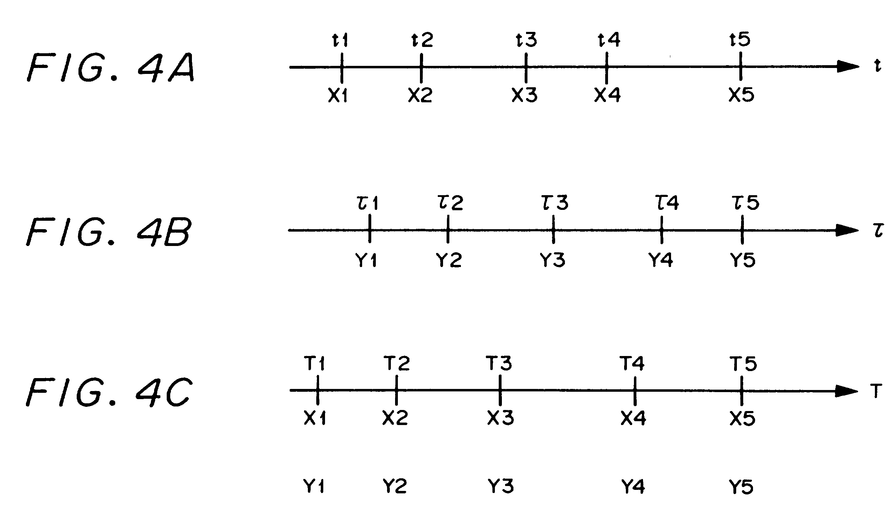

Operation of the apparatus of Figure 1 will be described below with reference to Figures 2A to 2e, 3a to 3o, and 4A to 4C. In the image converter 5, the reproduced video signal A, which is displayed on the display unit 5c as shown in Figure 3a, from the VTR 1 is supplied to a memory (digital memory). The image converter 5 generates a video signal, depending on the position of the joystick 5b operated by the operator, according to which the size of the image displayed on the display unit 5c is progressively reduced until the image finally disappears, and, at the same time, the position of the displayed image changes on the display unit 5c, with the image surrounded by a black background. The image converter 5 stores generated successive frames of video signals, which represent video images, as shown in Figures 3a to 3e, of desired sizes and at desired positions, in the memory at a plurality points of time X1, X2, X3, X4 and X5 along a time base t shown in Figure 4A.

Thereafter, an actual editing process is initiated. The operator operates the joystick 5b to cause the image converter 5 to read video signals from the memory at a plurality points of time t1, t2, t3, t4 and t5 along the time base t shown in Figure 4A, and interpolate image data between the read video images, thereby producing a video signal A′ according to which the size of the displayed image is progressively reduced until the image finally disappears, and, at the same time, the position of the displayed image changes.

At the same time, the image converter 5 generates a key signal A′ (KEY) indicative of the position of the video signal A thus generated. The position of the edges of the key signal A′ varies with the position and size of the video signal A′, as shown in Figures 3f to 3j.

Rather than directly storing, in the memory, the video signals that are of desired sizes and at desired positions at the points of time X1 to X5 along the time base t, the image converter 5 may store, in its memory, data indicative of positions of the joystick 5b corresponding to the video signals, and data indicative of positions of edges of the video signals, and also may edit the video signals by converting them based on the stored data, for thereby generating the video signal A′.

With respect to the reproduced video signals B and C from the VTRs 2 and 3, when the fader lever 6b is operated by the operator, the multiplier 6 alternately outputs the reproduced video signals B and C such that a transition occurs from the image represented by the reproduced video signal C as a boundary line between the images is translated diagonally across the screen of the display unit 6c from its upper left corner, as shown in Figures 3k to 3o. The multiplier 6 stores in its memory date indicative of the position of the fader lever 6b at which the images shown in Figure 3k to 3o change at respective points of time τ1, τ2, τ3, τ4 and τ5 along a time base τ shown in Figure 4B. In an editing process, the multiplier 6 reads the data indicative of the positions of the fader lever 6b from the memory, and selectively outputs the video signal B and C based on the read data, thus producing composite video signal Y1, Y2, Y3, Y4 and Y5 at the respective points of time τ1, τ2, τ3, τ4 and τ5 along the time base τ.

Based on the speed of rotation and the angular displacement of the jog dial 4b operated by the operator, the edit controller 4 controls operation of the VTRs 1, 2 and 3 to reproduce video signals in an ordinary playback mode, a slow playback mode, or a still playback mode. The reproduced images are displayed on the display unit 4c.

At the same time, the edit controller 4 also controls operation of the image converter 5 and the multiplier 6 based on the video signals stored at the various points of time along the time base t, or the data indicating the positions of the joystick 5b and the edges of the video signals, and the data indicating the positions of the fader lever 6b.

More specifically, the image converter 5 supplies the multiplier 6 with the video signal A′ which represent images that vary as shown in Figures 3a to 3e, and the key-signal A′ (KEY) whose edges change as shown in Figures 3f to 3j, over the signal lines L3 and L4, the switches SW2 and SW1, and the bus lines BS2 and BS1. The multiplier 6 then combines the video signal A′ and the key signal A′ (KEY) with the composite signals based on the video signals B and C which represent images that vary as shown in Figures 3k to 3o, through a keying process. The multiplier 6 now outputs a composite video signal (special effect video signal) D which represents images that vary, as shown in Figures 2a to 2e, at a plurality of points of time T1 to T5 along a time base T shown in Figure 4C, and supplies the composite video signal D to the VTR 7. The supplied composite video signal D is recorded on the magnetic tape along oblique tracks thereon in the VTR 7. The composite video signal D is also supplied to the edit controller 4 for display on the display unit 4c.

The time bases t, τ and T shown in Figures 4A, 4B and 4C, respectively, are independent of each other, and the various points of time along the time bases t, τ and T are selected as desired.

The image converter 5 may be controlled by the fader lever 6b of the multiplier 6, and the video signal A′ may be displayed on the display unit 6c of the multiplier 6.

The multiplier 6 may be controlled by the joystick 5b of the image converter 5, and the composite video signals based on the video signals B and C may be displayed on the display unit 5c of the image converter 5.

The special effects generating apparatus can therefore process a plurality of video signals to produce special effects based on a combination of image wipe, image deformation, and image movement through a simple and easy editing process.

## Claims

1. A special effects generating apparatus for processing first, second and third video signals supplied respectively from first, second and third video signal sources (1, 2, 3) to produce an output video signal, the apparatus comprising:
first boundary data generating means (5), responsive to the first video signal from the first video signal source (1), for generating, at a plurality of points of time along a first time base, data indicative of positions of edges of a first image represented by the first video signal, with respect to a reference video frame (5c), and for storing the generated data in a first memory (5);
second boundary data generating means (6), responsive to the second and third video signals from the second and third video signals sources (2, 3), for generating, at a plurality of points of time along a second time base, data indicative of positions of a boundary between second and third images represented by the second and third video signals, and for storing the generated data in a second memory (6);
image converting means (5) for processing frames stored in said first memory (5) to produce a fourth video signal based on said edges, and for generating a key signal indicative of a position of said fourth video signal;
selecting means (4) for selectively outputting said second and third video signals based on the data stored in said second memory (6); and
combining means (6) for keying said fourth video signal into an output signal from said selecting means (4) based on said key signal.

2. Apparatus according to claim 1 further comprising recording means (7) for recording the output video signal from said signal processing means (6) on a recording medium.

3. Apparatus according to claim 1 or claim 2, wherein said image converting means (5) interpolates data between frames stored in said first memory (5) to produce said fourth video signal.

4. A method of generating a special effect by processing first, second, and third video signals to produce an output video signal, the method comprising the steps of:
establishing edges of a first image represented by the first video signal with respect to a reference display screen at a plurality of points of time along a first time base;
establishing a boundary between a second image represented by the second video signal and a third image represented by the third video signal at a plurality of points of time along a second time base;
converting said first image to form a fourth image based on the established edges; generating a key signal indicative of the position of said fourth image;
combining the second and third video signals into a video signal representing a fifth image, based on said established boundary; and
keying said fourth image into said fifth image based on said key signal.

## Patentansprüche

1. Spezialeffekt-Generierungsgerät zur Verarbeitung von ersten, zweiten und dritten Videosignalen, die von einer ersten, zweiten bzw. dritten Videosignalquelle (1, 2, 3) geliefert werden, um ein Ausgangsvideosignal zu erzeugen, wobei das Gerät aufweist:
eine Grenzdaten-Generierungseinrichtung (5), die auf das erste Videosignal von der ersten Videosignalquelle (1) anspricht, um - in mehreren Zeitpunkten längs einer ersten Zeitachse - Daten zu generieren, die Positionen von Rändern eines ersten Bildes, welches durch das erste Videosignal repräsentiert wird, in bezug auf ein Referenz-Videovollbild (5c) zeigen, und um die generierten Daten in einem ersten Speicher (5) zu speichern;
eine zweite Grenzdaten-Generierungseinrichtung (6), die auf das zweite und dritte Videosignal von der zweiten und dritten Videosignalquelle (2, 3) anspricht, um - in mehreren Zeitpunkten längs einer zweiten Zeitachse - Daten zu erzeugen, die Positionen einer Grenze zwischen den zweiten und dritten Bildern anzeigen, die durch das zweite und dritte Videosignal repräsentiert werden, und um die generierten Daten in einem zweiten Speicher (6) zu speichern;
eine Bildumsetzungseinrichtung (5), um Vollbilder, welche im ersten Speicher (5) gespeichert sind, zu verarbeiten, um ein viertes Videosignal auf der Basis der Ränder zu erzeugen, und um ein Tastsignal zu generieren, welches eine Position des vierten Videosignals anzeigt;
eine Auswahleinrichtung (4) zur selektiven Ausgabe der zweiten und dritten Videosignale auf der Basis der Daten, die im zweiten Speicher (6) gespeichert sind; und
eine Kombinationseinrichtung (6) zur Eintastung des vierten Videosignals in ein Ausgangssignal aus der Auswahleinrichtung (4) auf der Basis dieses Tastsignals.

2. Gerät nach Anspruch 1, welches außerdem eine Aufzeichnungseinrichtung (7) zur Aufzeichnung des Ausgangsvideosignals aus der Signalverarbeitungseinrichtung (6) auf einem Aufzeichnungsträger aufweist.

3. Gerät nach Anspruch 1 oder 2, wobei die Bildumsetzungseinrichtung (5) Daten zwischen Vollbildern interpoliert, die im ersten Speicher (5) gespeichert sind, um das vierte Videosignal zu erzeugen.

4. Verfahren zur Generierung eines Spezialeffekts durch Verarbeitung von ersten, zweiten und dritten Videosignalen, um ein Ausgangsvideosignal zu erzeugen, wobei das Verfahren folgende Schritte aufweist:
Einrichten von Rändern eines ersten Bildes, welches durch das erste Videosignal repräsentiert wird, in bezug auf einen Referenzanzeigebildschirm in mehreren Zeitpunkten längs einer ersten Zeitachse;
Einrichten einer Grenze zwischen einem zweiten Bild, welches durch das zweite Videosignal repräsentiert wird, und einem dritten Bild, welches durch das dritte Videosignal repräsentiert wird, in mehreren Zeitpunkten längs einer zweiten Zeitachse;
Umsetzung des ersten Bildes, um ein viertes Bild auf der Basis der eingerichteten Ränder zu bilden;
Erzeugung eines Tastsignals, welches die Position des vierten Bildes anzeigt;
Kombinieren der zweiten und dritten Videosignale zu einem Videosignal, welches ein fünftes Bild repräsentiert, auf der Basis der eingerichteten Grenze; und
Eintasten des vierten Bildes in das fünfte Bild auf der Basis des Tastsignals.

## Revendications

1. Appareil de génération d'effets spéciaux pour traiter des premier, second et troisième signaux vidéo fournis respectivement par des première, seconde et troisième sources de signal vidéo (1, 2, 3) pour produire un signal vidéo de sortie, l'appareil comprenant :
un premier moyen de génération de données de limite (5), sensible au premier signal vidéo de la première source de signal vidéo (1), pour générer, en une pluralité d'instants sur une première base de temps, des données indicatrices de positions de bords d'une première image représentées par le premier signal vidéo, par rapport à une trame vidéo de référence (5c), et pour stocker les données générées dans une première mémoire (5) ;
un second moyen de génération de données de limite (6), sensible aux second et troisième signaux vidéo des seconde et troisième sources de signaux vidéo (2, 3) pour générer en une pluralité d'instants sur une seconde base de temps, des données indicatrices de positions d'une limite entre des seconde et troisième images représentées par les second et troisième signaux vidéo, et pour stocker les données générées dans une seconde mémoire (6) ;
un moyen de conversion d'image (5) pour traiter des trames stockées dans ladite première mémoire (5) pour produire un quatrième signal vidéo sur la base desdits bords, et pour générer un signal de touche indicateur d'une position dudit quatrième signal vidéo ;
un moyen de sélection (4) pour fournir sélectivement lesdits second et troisième signaux vidéo sur la base des données stockées dans ladite seconde mémoire (6) ; et
un moyen de mélange (6) pour introduire ledit quatrième signal vidéo dans un signal de sortie à partir dudit moyen de sélection (4) sur la base dudit signal de touche.

2. Appareil selon la revendication 1 comprenant en outre un moyen d'enregistrement (7) pour enregistrer le signal vidéo de sortie dudit moyen de traitement de signal (6) sur un support d'enregistrement.

3. Appareil selon la revendication 1 ou la revendication 2, dans lequel ledit moyen de conversion d'image (5) interpole des données entre des trames stockées dans ladite première mémoire (5) pour produire ledit quatrième signal vidéo.

4. Procédé de génération d'effets spéciaux par traitement des premier, second et troisième signaux vidéo pour produire un signal vidéo de sortie, le procédé comprenant les étapes de :
établissement de bords d'une première image représentée par le premier signal vidéo par rapport à un écran d'affichage de référence en une pluralité d'instants sur une première base de temps ;
établissement d'une limite entre une seconde image représentée par le second signal vidéo et une troisième image représentée par le troisième signal vidéo en une pluralité d'instants sur une seconde base de temps ;
conversion de ladite première image pour former une quatrième image sur la base des bords établis ; génération d'un signal de touche indicateur de la position de ladite quatrième image ;
mélange des second et troisième signaux vidéo dans un signal vidéo représentant une cinquième image, sur la base desdites limites établies ; et
introduction de ladite quatrième image dans ladite cinquième image sur la base dudit signal de touche.
